# EUROPEAN PATENT APPLICATION

(11) **EP 3 127 748 A1**
(43) Date of publication of application: **08.02.2017**
(21) Application number: 15773923.6
(22) Date of filing: 27.03.2015
(51) Int. Cl.: B60R 1/04, H04N 7/18

(54) **REAR-FIELD-OF-VIEW CONFIRMATION DEVICE AND AUTOMOBILE EQUIPPED WITH SAME**

(30) Priority: 01.04.2014 JP 2014075139; 01.04.2014 JP 2014075140
(71) Applicant: Panasonic Intellectual Property Management Co., Ltd., Osaka-shi, Osaka 570-6207 (JP)
(72) Inventor: SUENAGA, Terumitsu, Osaka-shi Osaka 540-6207 (JP); KUWABARA, Takashi, Osaka-shi Osaka 540-6207 (JP); MORISHITA, Kazuhiro, Osaka-shi Osaka 540-6207 (JP); AKAHORI, Hitoaki, Osaka-shi Osaka 540-6207 (JP)
(74) Representative: Vigand, Philippe
(86) International application number: PCT/JP2015/001773
(87) International publication number: WO 2015/151485

(57) **Abstract**

A rear-view monitor device includes a main housing mounted to a place in front of a driver seat in an inside of an automobile, a display unit mounted to the main housing at a side to the driver seat, a first camera capable of capturing a rear view image of an outside of the automobile, a second camera capable of capturing one of a front view image and a side view image of the outside of the automobile, and a light-emitting section disposed on an outer circumference of the main housing. The display unit includes a display disposed in the main housing and a controller. The controller is configured to cause the display to display a first image captured by the first camera in a first display area of the display, to form a second display area in at least a part of the first display area for displaying, in the second display area, a second image captured by the second camera, and to cause a portion of the light-emitting section corresponding to the second display area to emit light while forming the second display area. This rear-view monitor device can be used easily.

## Description

### TECHNICAL FIELD

The present disclosure relates to a rear-view monitor device so-called, for instance, a room mirror, and an automobile equipped with the device.

### BACKGROUND ART

A conventional rear-view monitor device of an automobile displays an image of a rear-view captured by a camera in an outside image area formed at a part of a room mirror. This rear-view monitor device includes a main housing mounted to a place in front of a driver seat, a display unit mounted in this housing at a side to the driver seat, and a camera coupled to this display unit and capable of capturing an outside view of the automobile.

The display unit includes a display disposed in the main housing, a semitransparent mirror disposed at this display at a side to the driver seat, and a controller coupled to the display and the camera.

The controller is configured to form an outside image area for displaying the outside view captured by the camera therein, in at least a part of a display area of the display. The controller displays an image captured by the camera in this outside image area. A rear-view monitor device similar to the foregoing device is disclosed in PTL 1.

The above conventional rear-view monitor device forms the outside image area for displaying the outside image captured by the camera therein, in at least a part of the display area of the display. This outside image area thus shows the outside image captured by the camera, and the display area other than the outside image area functions as a mirror and shows a rear view of the automobile. In other words, the outside image captured by the camera and the rear-view shown on the mirror can be displayed simultaneously on the display area of the same display.

### CITATION LIST

### PATENT LITERATURE

PTL 1: Japanese Patent Laid-Open Publication No.11-78693

### SUMMARY

A rear-view monitor device includes a main housing mounted to a place in front of a driver seat in an inside of an automobile, a display unit mounted to the main housing at a side to the driver seat, a first camera capable of capturing a rear view image of an outside of the automobile, a second camera capable of capturing one of a front view image and a side view image of the outside of the automobile, and a light-emitting section disposed on an outer circumference of the main housing. The display unit includes a display disposed in the main housing and a controller. The controller is configured to cause the display to display a first image captured by the first camera in a first display area of the display, to form a second display area in at least a part of the first display area for displaying, in the second display area, a second image captured by the second camera, and to cause a portion of the light-emitting section corresponding to the second display area to emit light while forming the second display area.

This rear-view monitor device can be used easily.

### BRIEF DESCRIPTION OF DRAWINGS

FIG. 1 is a front view of an inside of an automobile equipped with a rear-view monitor device in accordance with Exemplary Embodiment 1.
FIG. 2 is a plan view of the automobile in accordance with Embodiment 1.
FIG. 3 is a sectional view of the automobile on line III-III shown in FIG. 2.
FIG. 4 is a front view of a main housing of the rear-view monitor device in accordance with Embodiment 1.
FIG. 5 is a sectional view of the rear-view monitor device on line V-V shown in FIG. 4.
FIG. 6 is a block diagram of the rear-view monitor device in accordance with Embodiment 1.
FIG. 7 is a flowchart showing an operation of the rear-view monitor device in accordance with Embodiment 1.
FIG. 8 is a front view of a main housing of a rear-view monitor device in accordance with Exemplary Embodiment 2.
FIG. 9 is a block diagram of the rear-view monitor device in accordance with Embodiment 2.
FIG. 10 is an enlarged view of an adjuster of the rear-view monitor device in accordance with Embodiment 2.
FIG. 11 is an enlarged view of the adjuster of the rear-view monitor device in accordance with Embodiment 2.
FIG. 12A is a flowchart showing an operation of the rear-view monitor device in accordance with Embodiment 2.
FIG. 12B is a flowchart showing the operation of the rear-view monitor device in accordance with Embodiment 2.
FIG. 13A is a flowchart showing another operation of the rear-view monitor device in accordance with Embodiment 2.
FIG. 13B is a flowchart showing another operation of the rear-view monitor device in accordance with Embodiment 2.

### DETAIL DESCRIPTION OF PREFERRED EMBODIMENTS

### Exemplary Embodiment 1

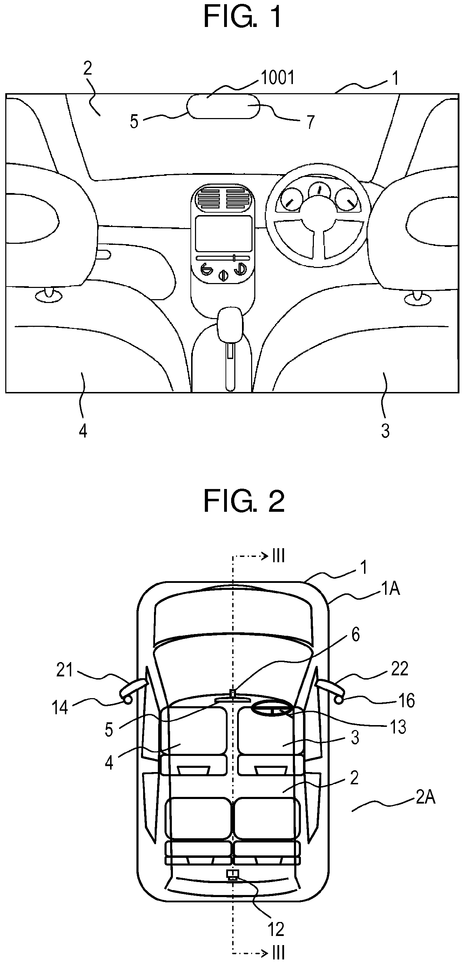

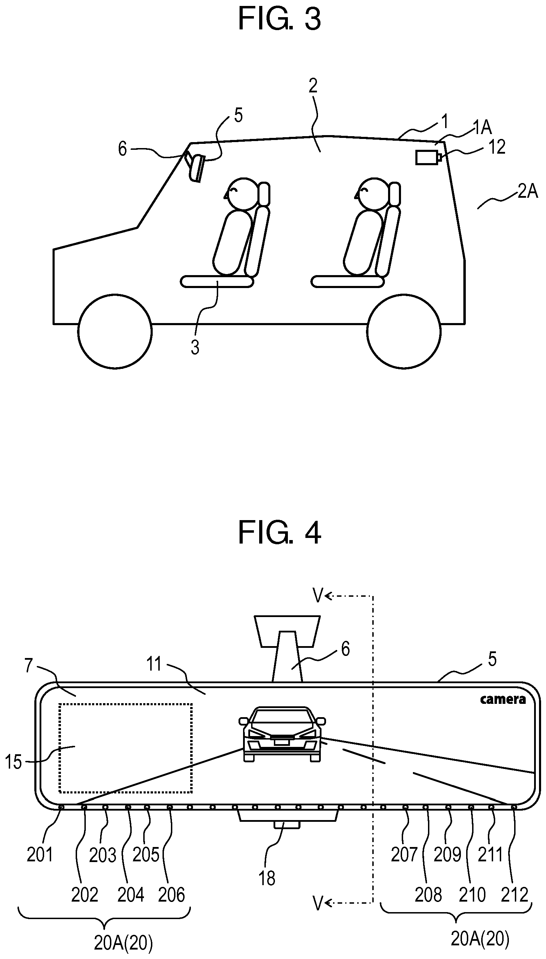

FIG. 1 is a front view of inside 2 of automobile 1 equipped with rear-view monitor device 1001 in accordance with Exemplary Embodiment 1. FIG. 2 is a plan view of automobile 1. FIG. 3 is a sectional view of automobile 1 on line III-III shown in FIG. 2. Automobile 1 includes car body 1A constituting inside 2 therein. The outside of car body 1A constitutes outside 2A. Rear-view monitor device 1001 includes main housing 5. Main housing 5 is mounted with a mounting unit at a front-upper section between driver seat 3 and passenger seat 4 in inside 2 of automobile 1. Main housing 5 is movable with respect to mounting unit 6 particularly in a slanting angle with respect to mounting unit 6.

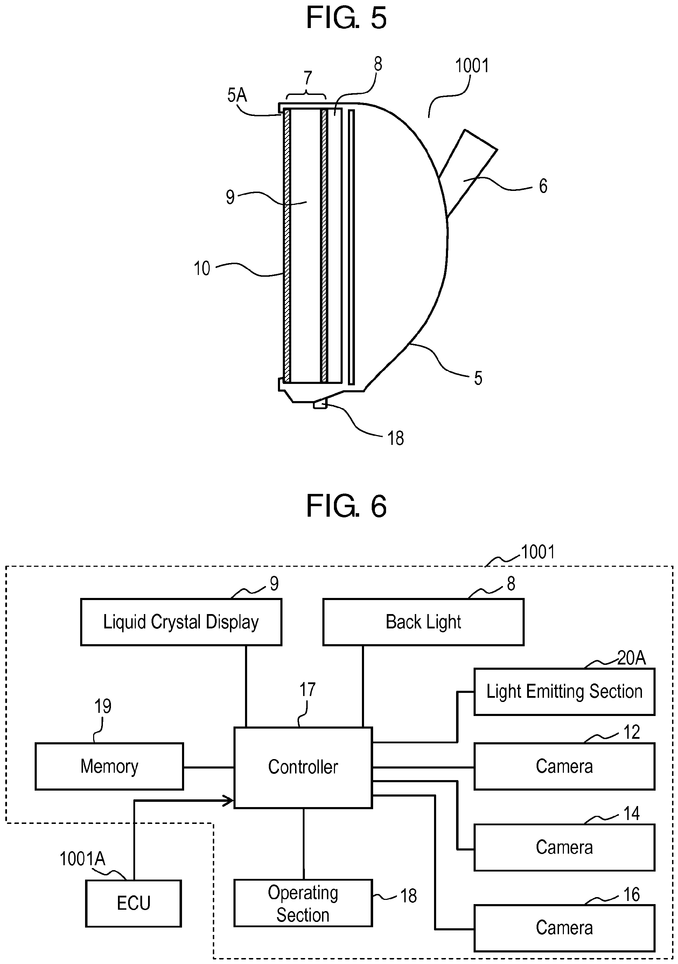

FIG. 4 is a front view of main housing 5. FIG. 5 is a sectional view of main housing 5 on line V-V shown in FIG. 4. Main housing 5 has a container shape having opening 5A facing driver seat 3. Display unit 7 is mounted into opening 5A.

Display unit 7 includes backlight 8 disposed in main housing 5, display 9 including a display element (e.g. liquid crystal display) disposed outside backlight 8, namely, closer to driver seat 3 than backlight 8, and transparent cover 10 disposed outside display 9, namely, closer to driver seat 3 than display 9. Display 9 includes display area 11 displaying an image therein.

Display unit 7, as shown in FIG. 4, displays a rear-view image of outside 2A in display area 11 of display 9. This rear-view image is captured by camera 12 shown in FIG. 2. For instance, a left-turn operation to turn-signal lever 13 allows display unit 7 to display a left side image of outside 2A which is captured by camera 14 in display area 15 within display area 11. A right-turn operation to turn-signal lever 13 allows display unit 7 to display a right side image of outside 2A which is captured by camera 16 in display area 15.

In FIG. 4, display area 15 is located on the left side in display area 11 for displaying the left side image of outside 2A captured by camera 14 since turn-signal lever 13 is operated for indicating the left turn. When turn-signal lever 13 is operated for indicating a right turn, display area 15 is located on the right side in display area 11 for displaying the right side image captured by camera 14 captured by camera 16.

In other words, display area 15 can be moved to both sides in display area 11 depending on an image to be displayed thereon.

FIG. 6 is a block diagram of rear-view monitor device 1001. Backlight 8, display 9, cameras 12, 14, and 16 are coupled to controller 17. Camera 12 is disposed at a rear part of inside 2. Camera 14 is disposed at left side-view mirror 21. Camera 16 is disposed at right side-view mirror 22.

Controller 17 is coupled to operating section 18, such as a power switch, memory 19 for storing an operational program, and light-emitting section 20A.

An operation to turn-signal lever 13 of automobile 1 is transmitted from engine control unit (ECU) 1001A to controller 17. A left-turn operation to turn-signal lever 13 by a driver allows ECU 1001A to transmit a turn signal indicating the left turn to controller 17 while a right-turn operation to turn-signal lever 13 by the driver allows ECU 1001A to transmit a turn signal indicating the right turn to controller 17.

Rear-view monitor device 1001 in accordance with Embodiment 1, as discussed above, allows display area 11 to display therein the rear-view image of outside 2A captured by camera 12 disposed at the rear section of inside 2. A left-turn operation to turn-signal lever 13 of automobile 1 allows display area 15 within display are1 11 to display therein a left-side image of outside 2A captured by camera 14 disposed at left side-view mirror 21. A right-turn operation to turn-signal lever 13 of automobile 1 allows display area to display therein a right-side image of outside 2A captured by camera 16 disposed at right side-view mirror 22.

As shown in FIG. 4, light-emitting section 20A includes plural light-emitting elements 20 (201 to 212) which are disposed on an outer circumference, such as an upper section or a lower section, of display area 11 in display 9.

To be more specific, display 9 has an oblong shape, as shown in FIG. 4. Light-emitting elements 20 (201 to 212) are disposed laterally at predetermined intervals on the lower section of display 9, namely, on a part of main housing 5. Specifically, light-emitting elements 201 to 206 are located below and on the left side of display area 11, and light-emitting elements 207 to 212 are located below and on the right side of display area 11.

Controller 17 allows light-emitting elements 201 to 206 out of light-emitting elements 20 (201 to 212) to emit light. Light-emitting elements 201 to 206 are disposed at a place corresponding to display area 15.

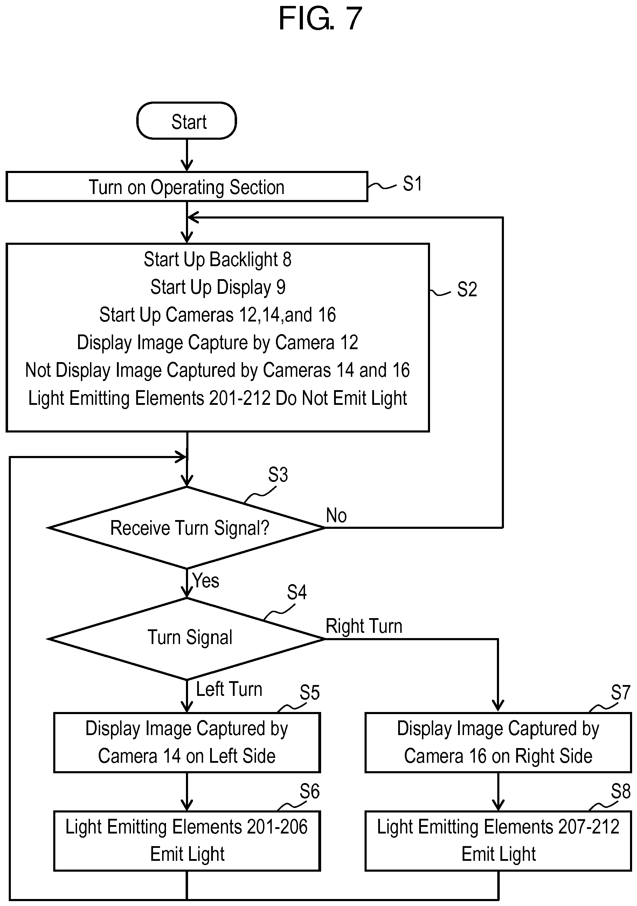

An operation of rear-view monitor device 1001 in accordance with Embodiment 1 will be described below. FIG. 7 is a flowchart showing the operation of rear-view monitor device 1001. Upon turning on rear-view monitor device 1001 with an operation to operating section 18 (step S1), controller 17 starts up backlight 8, display 9, cameras 12, 14, and 16, thereby allowing display area 11 to display a rear-view image of outside 2A captured by camera 12 disposed at a rear section of inside 2, and allowing light-emitting elements 20 not to emit light (step S2). The driver monitors the rear view image displayed in display area 11. Nevertheless, the images captured by cameras 14 and 16 are not displayed on display area 15 although these cameras are activated.

Next, controller 17 determines whether or not controller 17 receives a turn signal from ECU 1001A (step S3). In step S3, if controller 17 determines that controller 17 does not receive the turn signal ("No" in step S3), controller 17 allows display area 11 in step S2 to display the rear view image of outside 2A captured by camera 12 disposed at the rear section of inside 2.

In step S3, when controller 17 determines that controller 17 receives the turn signal ("Yes" in step S3), controller 17 then determines whether the received turn signal indicates a left turn or a right turn (step S4). In step S4, when controller 47 determines that turn-signal lever 13 is pressed downward for a left turn and the turn signal indicates the left turn, controller 17 receives the turn signal indicating the left turn from ECU 1001A, and allows display area 5 shown in FIG. 4 to display a left side image of outside 2A captured by camera 14 mounted to left side-view mirror 21 (step S5). Simultaneously, controller 17 allows light-emitting elements 20 (201 to 206) out of light-emitting elements 20 (201 to 212) corresponding to display area 15 disposed laterally, and allows other light-emitting elements 20 (207 to 212) not to emit light (step S6).

In other words, even when both of the rear-view image captured by camera 12 and left side image of outside 2A captured by camera 14 are simultaneously displayed in display area 11, light-emitting elements 201 to 206 corresponding to display area 15 displaying therein the left side image of outside 2A emit light while the other light-emitting elements 20 do not emit light. This configuration allows the driver to realize instantaneously that the image displayed above light-emitting elements 201 to 206 is the image of the left side of outside 2A, and the other image is the rear-view image. As a result, the driver can drive automobile 1 properly and easily, thus allowing and rear-view monitor device 1001 to be used easily.

When the turn signal indicates a right turn in step S4, controller 17 receives the turn signal indicating the right turn from ECU 1001A and allows display area 15 (above light-emitting elements 207 to 212) located on the right side of display area 11 to display therein the image on the right side of outside 2A shown in FIG. 4 captured by camera 16 disposed at side-view mirror 22 on the right side of automobile 1 (step S7). At this moment, controller 17 allows light-emitting elements 207 to 212 disposed below display area 11 on the right side to emit light, and allows the other light-emitting elements 20 (201 to 206) not to emit light (step S8).

To be more specific, when display area 11 displays simultaneously both of the rear-view image captured by camera 12 and the right-side image of outside 2A captured by camera 16, controller 17 allows light-emitting elements 207 to 212 to emit light for highlighting display area 15 displaying therein the right-side image of outside 2A, and does not allow the other light-emitting elements 201 to 206 to emit light. This configuration allows the driver to realize instantaneously that the image above light-emitting elements 207 to 212 shows the right-side image of outside 2A, and the image shown in the other area is the rear-view image. As a result, the driver can drive automobile 1 properly and easily, thus allowing rear-view monitor device 1001 to be convenient for the driver.

The driver pays greater attention for watching forward when the driver drives automobile 1 forward, and monitors the display for only a short time. The conventional rear-view monitor device discussed above does not allow the driver to realize instantaneously, for instance, whether a moving object displayed belongs to which images, namely, an image captured by a camera or an image shown in a mirror since both of these images coexist in the display area. The conventional rear-view monitor device is thus inconvenient for the driver.

In rear-view monitor device 1001 in accordance with Embodiment 1, when forming display area 15, controller 17 allows light-emitting elements 20 disposed on main housing 5 at the outer circumference of display area 15 to emit light, so that the driver can realize instantaneously whether the image shown in display area 11 is an image captured by camera 12 or an image captured by camera 14 (16). As a result, the driver can drive automobile 1 properly and easily, thus allowing rear-view monitor device 1001 to be a user-friendly device.

Rear-view monitor device 1001 in accordance with Embodiment 1 includes cameras 14 and 16 for capturing rear-view images from sides of automobile 1; however, these cameras can be disposed forward for capturing a front-view image, front-right view image or front-left view image.

As discussed above, A rear-view monitor device 1001 in accordance with Embodiment 1 includes main housing 5 mounted to a place in front of driver seat 3, display unit 7 mounted to main housing 5 at a side to driver seat 3, camera 12 capable of capturing a rear view image of outside 2A of automobile 1, camera 14 (16) capable of capturing one of a front view image and a side view image of outside 2A of automobile 1, light-emitting section 20A disposed at an outer circumference of main housing 5. Display unit 7 includes display 9 disposed in main housing5 and controller 17 coupled to display 9 and cameras 12 and 14 (16). Controller 17 is configured to cause display area 11 of display 9 to display therein an image captured by camera 12. Controller 17 is configured to form display area 15 in at least a part of display area 11 for displaying, in display area 15, an image captured by camera 14 (16). While forming display area 15, controller 17 is configured to cause a portion of light-emitting section 20A corresponding to display area 15 to emit light.

Display 9 may have an oblong shape. In this case, light-emitting section 20A is disposed to a place on main housing 5 corresponding to an upper section of display 9 or a lower section of display 9. Light-emitting section 20A may include plural light-emitting elements 20 disposed in a lateral direction at predetermined intervals. Controller 17 is configured to cause light-emitting elements 20 out of the plural light-emitting elements 20 disposed correspondingly to display area 15 (at the outer circumference of display area 15 according to Embodiment 1) to emit light while forming display area 15.

Automobile 1 includes rear-view monitor device 1001 and car body 1A having main housing 5 of rear-view monitor device 1001 mounted thereto. Camera 12 is disposed inside 2 of car body 1A at a rear part of the driver seat. Cameras 14 and 16 are disposed in inside 2 or outside 2A of car body 1A.

Engine control unit 1001A transmits a turn signal. Camera 14 (16) is mounted at a place such that camera 14 (16) can capture a side view image of outside 2A. Controller 17 is configured to form display area 15 upon receiving the turn signal from engine control unit 1001A.

Controller 17 is configured to form display area 15 at a left side within display area 11 when the turn signal indicates a left turn. Controller 17 is configured to form display area 15 at a right side within display area 11 when the turn signal indicates a right turn.

### Exemplary Embodiment 2

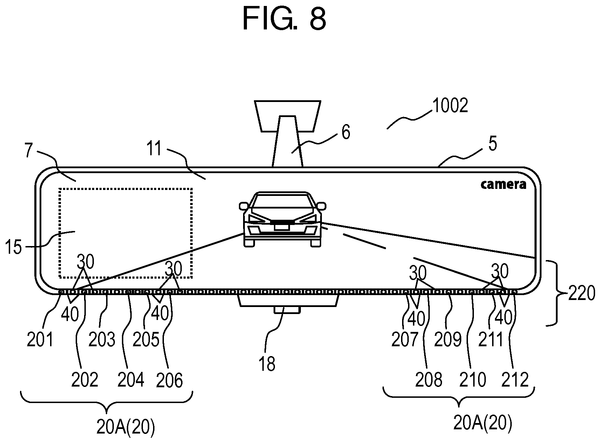

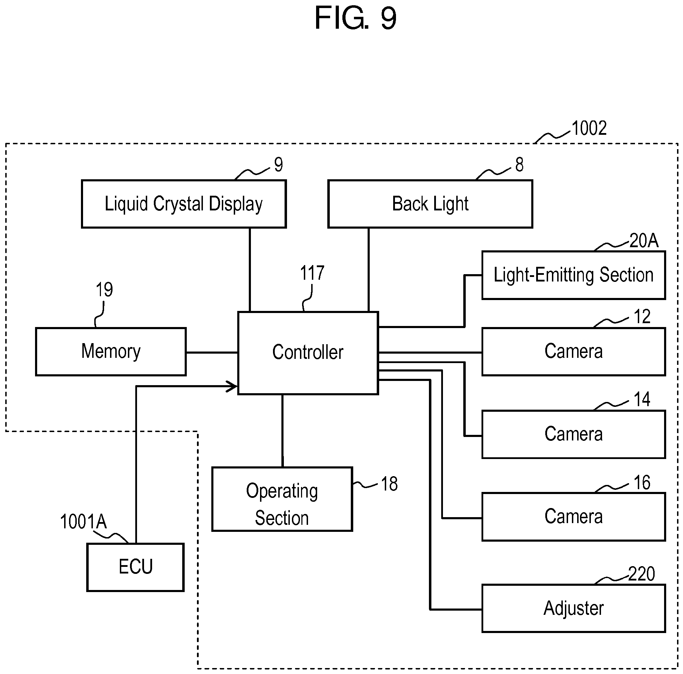

FIG. 8 is a front view of rear-view monitor device 1002 in accordance with Exemplary Embodiment 2. FIG. 9 is a block diagram of rear-view monitor device 1002. In FIG. 8 and FIG. 9, components identical to those of rear-view monitor device 1001 in accordance with Embodiment 1 shown in FIGs. 4 to 6 are denoted by the same reference numerals. Rear-view monitor device 1002 is mounted into car body 1A with mounting section 6 similarly to rear-view monitor device 1001 shown in FIGs. 1 to 3. Rear-view monitor device 1002 includes controller 117 instead of controller 17 of rear-view monitor device 1001. Controller 117 is connected to backlight 8, display 9, cameras 12, 14, and 16. Rear-view monitor device 1002 further includes adjuster 220 connected to controller 117.

Controller 117 receives an operation to turn-signal lever 13 of automobile 1 from engine control unit (ECU) 1001A. In accordance with Embodiment 2, display area 11 displays therein a rear-view image of outside 2A captured by camera 12 disposed at a rear section of inside 2. A left-turn operation to turn-signal lever 13 of automobile 1 allows display area 15 within display area 11 to display therein a left-side image of outside 2A captured by camera 14 disposed at side-view mirror 21 mounted on the left side. A right-turn operation to turn-signal lever 13 of automobile 1 allows display area 15 to display therein a right side image of outside 2A captured by camera 16 disposed at right side-view mirror 22.

As shown in FIG. 8, light-emitting section 20A and adjuster 220 are disposed at the outer circumference including an upper section and a lower section of display area 11 of display 9. To be more specific, display 9 shown in FIG. 8 has an oblong shape. Light-emitting section 20A and adjuster 220 are disposed in a lateral direction on main housing 5 at a place corresponding to the lower section of display 9.

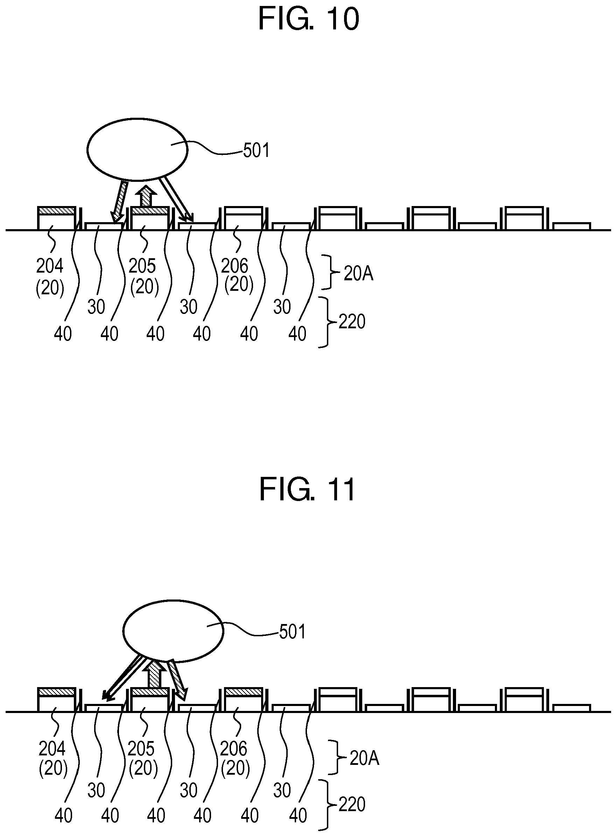

FIG. 10 and FIG. 11 are enlarged views of adjuster 220 of rear-view monitor device 1002. As shown in FIG. 10, adjuster 220 includes plural light shielding plates 40 and plural light-receiving elements 30 disposed alternately with light-emitting elements 20 across light shielding plates 40. Light-receiving elements 30 are thus alternately placed with light-emitting elements 20. Each one of light shielding plates 40 is disposed between respective one of light-receiving elements 30 and respective one of light-emitting elements 20 adjacent to each other.

For instance, when the turn signal indicates a left turn, controller 117 causes light-emitting elements 201 to 206 out of light-emitting elements 20 placed in the lateral direction and disposed at a place corresponding to display area 15 to emit light.

While light-emitting elements 201 to 206 emit light, finger 501 approaches light-emitting element 206 disposed at the most right place as shown in FIG. 10 and FIG. 11. This operation allows light-receiving element 30 out of other light-receiving elements 30 adjacent to light-emitting element 206 to capture the light which is emitted from light-emitting element 206 and reflected on finger 501. Light-receiving element 30 receiving the light then transmits a signal to controller 117. Receiving this signal, controller 117 can move display area 15 to a right part within display area 11 shown in FIG. 8.

Finger 501 approaches light-emitting element 206 disposed at the most right place and then moved away from light-emitting element 206. This operation is continuously repeated plural times, and then, the size of display area 15 can be enlarged. This configuration allows the driver to easily monitor the image displayed in display area 15. In contrary, when the driver wants to move display area 15 that has been moved rightward to leftward as shown in FIG. 8, finger 501 approaches light-emitting elements 20 disposed on the left side of display area 15 to cause this light-emitting element 20 to emit light, and the light reflected on finger 501 is captured by light-receiving element 30 which then transmits a signal to controller 117. Receiving this signal, controller 117 moves display area 15 to the left side within display area 11, as shown in FIG. 8.

Finger 501 approaches light-emitting element 20 disposed at the most left place of the display area 15 that has been enlarged, and then, moved away from this light-emitting element 20. This operation may be repeated plural times to reduce the size of display area 15.

As discussed above, the size of display area 15 can be reduced, or display area 15 can be moved within display area 11, hence allowing the rear-view image shown in display area 11 to be monitored easily.

Adjuster 220 is disposed on main housing 5 at the outer circumference of display area 11. This structure prevents display area 11 from being stained during the operation. As a result, display area 11 can be easily monitored by the driver and is convenient for the driver.

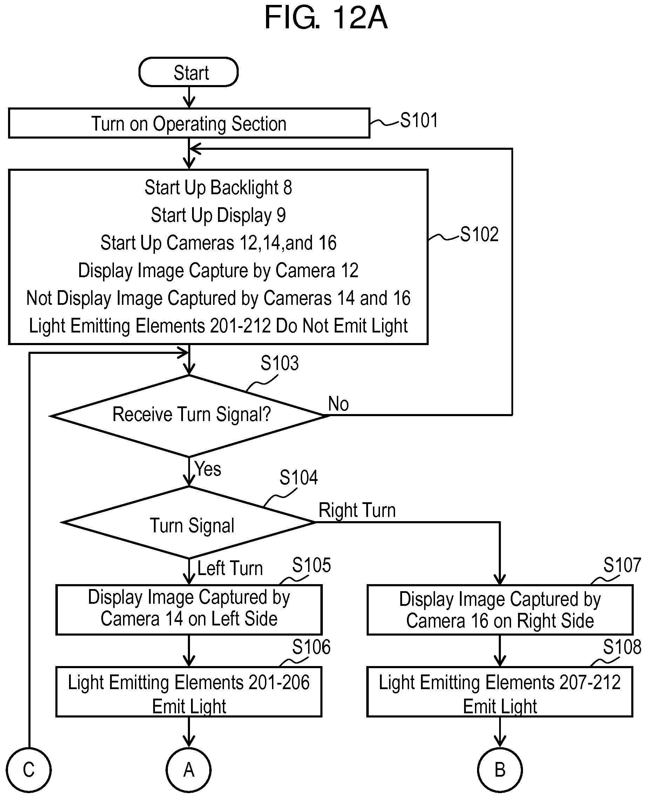

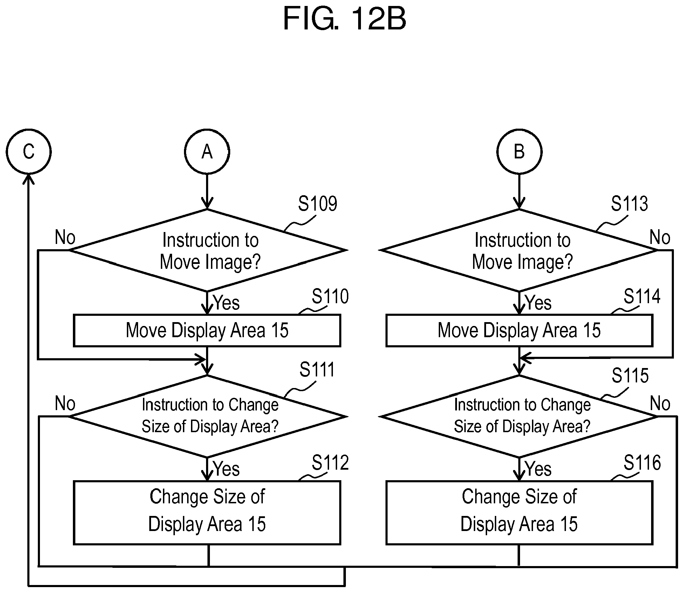

FIG. 12A and FIG. 12B are flowcharts showing an operation of rear-view monitor device 1002. Upon turning on operating section 18 (step S101), controller 117 starts up backlight 8, display 9, cameras 12, 14, and 16. Controller 117 then allows display area 11 to display therein the rear-view image of outside 2A captured by camera 12 disposed at a rear section of inside 2. Controller 117 does not allow light-emitting elements 20 to emit light (step S102). The driver can monitor the rear-view with the image displayed in display area 11. Nevertheless, the images captured by cameras 14 and 16 are not displayed although these cameras have been started up.

Next, controller 117 determines whether or not controller 17 receives a turn signal from ECU 1001A (step S103). In the case that controller 17 does not receive the turn signal in step S103 ("No" in step S103), controller 117 allows display area 11 to display therein the rear-view image of outside 2A captured by camera 12 disposed at the rear section of inside 2.

In the case that controller 117 receives the turn signal in step S103 ("Yes" in step S103), controller 117 determines whether the turn signal indicates a left-turn or a right-turn (step S104). In step S104, when controller 117 determines that the turn-signal indicates the left-turn, controller 117 receives the turn signal, which is exhibited by operating turn-signal lever 13 to indicate the left-turn, from ECU 1001A. Controller 117 then allows display area 15 shown in FIG. 8 to display therein the left side image of outside 2A is captured by camera 14 disposed at left side-view mirror 21 (step S105). At this moment, controller 117 causes light-emitting elements 201 to 206 out of multiple light-emitting elements 20 disposed in a lateral direction and disposed correspondingly to display area 15 to emit light, and yet, does not allow other light-emitting elements 207 to 212 to emit light (step S106).

In other words, when the rear-view image captured by camera 12 and the left side image of outside 2A captured by camera 14 are simultaneously displayed in display area 11, controller 117 causes light-emitting elements 201 to 206 disposed correspondingly to display area 15, in which the left side image of outside 2A is displayed, emit light and yet does not cause the other light-emitting elements 207 to 212 to emit light. This configuration allows the driver to realize instantaneously that the image displayed above light-emitting elements 201 to 206 is the left side image of outside 2A, and the other section shows the rear-view image. As a result, the driver can drive automobile 1 properly and easily, thus allowing the rear-view monitor device 1002 to be more convenient for the driver.

In the case that the turn signal indicates the right-turn in step S104, controller 117 receives the turn signal indicating the right-turn, and then allows a right side section (above light-emitting elements 207 to 212) of display area 11 shown in FIG. 8 to display therein an image of right-side view of outside 2A captured by camera 16 disposed at right side-view mirror 22 (step S107). At this moment, controller 117 causes light-emitting elements 207 to 212 out of light-emitting elements 20 disposed in the lateral direction disposed correspondingly to display area 15 (on the right side) to emit light, and yet, does not allow other light-emitting elements 20 (201 to 206) to emit light (step S108).

In other words, when the rear-view image captured by camera 12 and the right side image of outside 2A captured by camera 16 are simultaneously displayed in display area 11, controller 117 causes light-emitting elements 207 to 212 disposed correspondingly to display area 15 displaying therein the right side image of outside 2A emit light, and yet does not cause the other light-emitting elements 20 (201 to 206) to emit light. This configuration allows the driver to realize instantaneously that the image displayed above light-emitting elements 207 to 212 is the right side image of outside 2A, and the other section shows the rear-view image. As a result, the driver can drive automobile 1 properly with ease, thus allowing the rear-view monitor device 1002 to be more convenient for the driver.

In step S106, while the rear-view image captured by camera 12 and the left-side image captured by camera 14 of outside 2A are simultaneously displayed in display area 11, as shown in FIG. 8, controller 117 determines whether or not adjuster 220 sends an instruction to move display area 15 (step S109). In step S109, when controller 17 determined that the movement of the display area 15 is instructed ("Yes" in step S109), controller 117 moves display area 15 within display area 11 (step S110). To be more specific, while display area 15 is to move rightward, finger 501 approaches the most right light-emitting element 206 while light-emitting elements 201 to 206 emit light. This operation causes adjuster 220 to send an instruction to move display area 15 rightward, so that the display area 15 may be moved rightward from the position shown in FIG. 8 (step S110).

When adjuster 220 does not send the instruction to moving display area 15 in step S109 ("No" in step S109), or when the display area 15 has been moved in step S110, controller 117 determines whether or not adjuster 220 sends an instruction to change the size of display area 15 (step S111). When controller 17 determines that adjuster 220 sends the instruction to change the size of display area 15 in step S111 ("Yes" in step S111), controller 117 changes the size of display area 15 (step S112). To be more specific, finger 501 approaches the right most light-emitting element 206 and is moved away from light-emitting element 206. This operation is repeated continuously plural times, and then, adjuster 220 sends the instruction to change (increase) the size of display area 15, thereby increasing the size of display area 15 (step S112). Finger 501 approaches the left most light-emitting element 201 of the enlarged display area 15, and is moved away from light-emitting element 201. This operation is repeated continuously plural times, and then, adjuster 220 sends the instruction to change (reduce) the size of display area 15, thereby reducing the size of display area 15 (step S112).

When controller 117 determines in step S111 that adjuster 220 does not issue the instruction to change the size of display area 15 ("No" in step S111), or when the size of display area 15 has been changed in step S112, returning to step S103 again, controller 117 determines whether or not ECU 1001A transmits the turn signal.

While the rear-view image of outside 2A captured by camera 12 and the right side image of outside 2A captured by camera 16 are simultaneously displayed in display area 11 in step S108, controller 117 determines whether or not adjuster 220 sends the instruction to move the display area 15 (step S113). When controller 117 determines that adjuster 220 sends the instruction to move the display area 15 ("Yes" in step S113), controller 117 moves the display area 15 within display area 11 (step S114). To be more specific, when display area 15 is to be moved leftward while displaying the image of right-side view of outside 2A captured by camera 16 disposed at right side-view mirror 22, and display area 15 at this moment is located on the right side (above light-emitting elements 207 to 212) in display area 11 shown in FIG. 8, finger 501 approaches the left most light-emitting element 207 out of light-emitting elements 207 to 212 that emit light. This operation causes adjuster 220 to send the instruction to move the display area 15, so that display area 15 may be moved leftward in display area 11, as shown in FIG. 8 (step S114).

When controller 117 determines that adjuster 220 does not send the instruction to move the display area 15 in step S113 ("No" in step S113), or when the display area 15 has been moved in step S114, controller 117 determines whether or not adjuster 220 sends the instruction to change the size of the display area 15 (step S115). When controller 117 determines in step S115 that adjuster 220 sends the instruction to change the size of display area 15 ("Yes" in step S115), controller 117 changes the size of display area 15 (step S116). To be more specific, finger 501 approaches the left-most light-emitting element 207, and is moved away from light-emitting element 207. This operation is repeated continuously plural times, so that adjuster 220 may send the instruction to change the size of display area 15, thereby changing (increasing) the size of display area 15 (step S116). Finger 501 approaches the right-most light-emitting element 20 disposed below the enlarged display area 15. This operation is repeated plural times. This repetitive operation causes adjuster 220 to send the instruction to change (reduce) the size of display area 15, thereby reducing the size of display area 15 (step S116).

When controller 117 determines in step S115 that adjuster 220 does not send the instruction to change the size of display area 15 ("No" in step S115), or when the size of display area 15 has been changed in step S116, returning to step S103 again, controller 117 determines whether or not controller 117 receives the turn signal from ECU 1001A.

As discussed above, adjuster 220 is disposed at main housing 5 at the outer circumference of display area 11 for adjusting at least one of the position and the size of display area 15 in display area 11 of display 9.

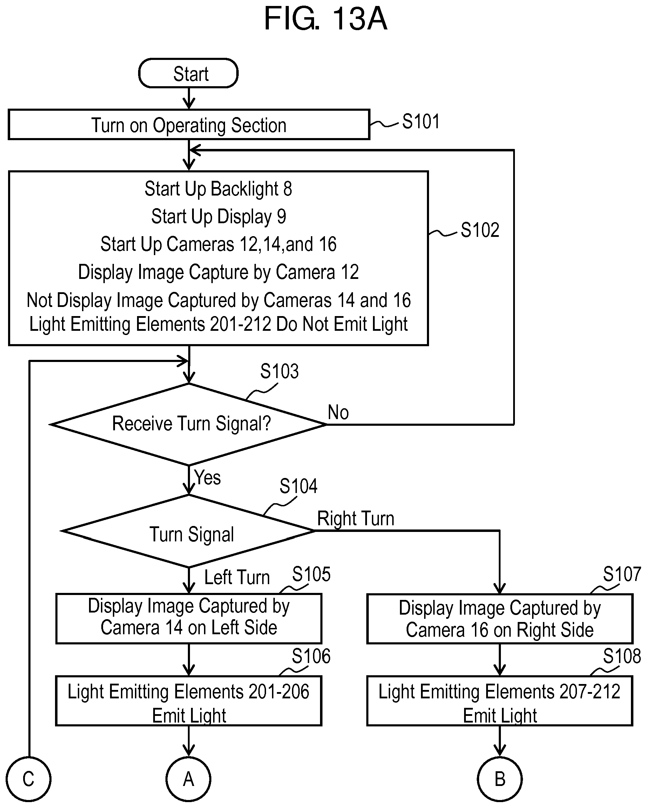

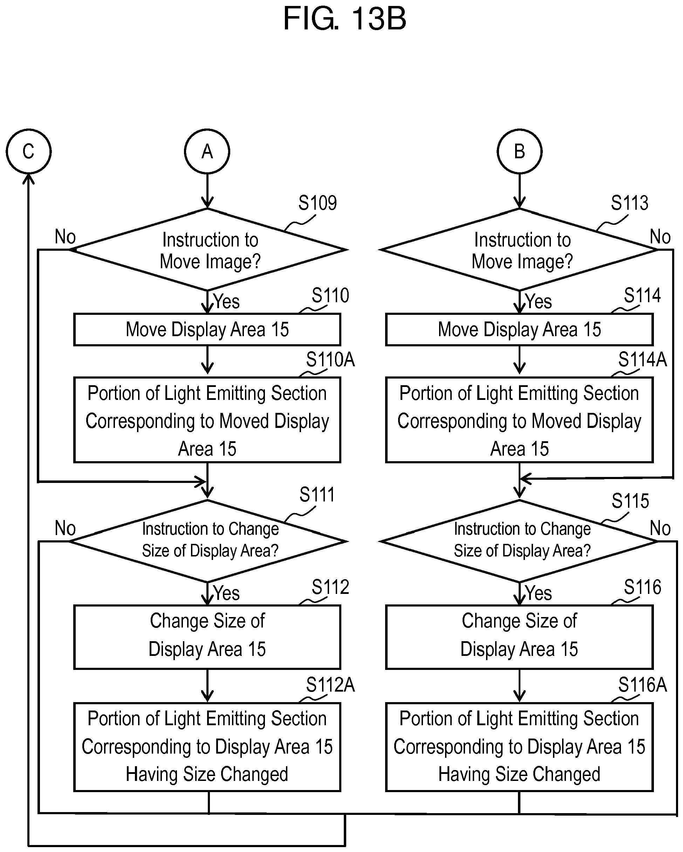

FIG. 13A and FIG. 13B are flowcharts showing another operation of rear-view monitor device 1002. In FIG. 13A and FIG. 13B, operations similar to those shown in FIG. 12A and FIG. 12B are denoted by the same reference numerals.

In the operation shown in FIG. 13A and FIG. 13B, when display area 15 is moved in step S110, controller 117 causes a portion of light-emitting section 20A corresponding to the moved display area 15 to emit light, and causes the other portion thereof not to emit light (step S110A). To be more specific, controller 117 causes in step S110A light-emitting elements 20 disposed on the outer circumference of the moved display area 15 to emit light, and causes other light-emitting elements 20 not disposed on the outer circumference of the moved display area 15 not to emit light. For instance, in the case the display area 15 is moved leftward or rightward, the portion of light-emitting section 20A moves leftward or rightward according to the movement of the display area 15. Then, in step S111, controller 117 determines whether or not adjuster 220 sends the instruction to change the size of display area 15.

In step S112 shown in FIG. 13B, when the size of display area 15 is changed, controller 117 causes a portion of light-emitting section 20A corresponding to display area 15 to emit light, and causes the other portion of light-emitting section 20A not to emit light (step S112A). To be more specific, in step S112A, controller 117 causes light-emitting elements 20 out of light-emitting elements 20 of light-emitting section 20A and disposed on the outer circumference of display area 15 having the size changed to emit light. Controller 117 causes light-emitting elements 20 not disposed on the outer circumference of display area 15 having the size changed not to emit light. For instance, when the size of display area 15 is changed to increase, the portion of light-emitting section 20A is enlarged in accordance with an enlarging lower side of display area 15. That is, the number of light-emitting elements out of light-emitting elements 20 which emit light increases. To the contrary, when the size of display area is changed to reduce, the portion of light-emitting section 20A is reduced in accordance with a reduced lower side of display area 15. That is, the number of light-emitting elements out of light-emitting elements 20 which emit light decreases. Returning to step S103 again, controller 117 determines whether or not controller 117 receives the turn signal from ECU 1001A.

In step S114 shown in FIG. 13B, when display area 15 is moved, controller 117 causes the portion of light-emitting section 20A corresponding to moved display area 15 to emit light, and causes the other portion thereof not to emit light (step S114A). To be more specific, controller 117 in in step S114Acauses light-emitting elements 20 disposed on the outer circumference of the moved display area 15 to emit light, and causes other light-emitting elements 20 not disposed on the outer circumference of the moved display area 15 not to emit light. Then, in step S115, controller 117 determines whether or not adjuster 220 sends the instruction to change the size of display area 15.

In step S116 shown in FIG. 13B, when the size of display area 15 is changed, controller 117 causes the portion of light-emitting section 20A corresponding to display area 15 having the size changed to emit light, and causes the other portion of light-emitting section 20A not corresponding to display area 15 not to emit light (step S116A). To be more specific, controller 117 in step S116A causes light-emitting elements 20 out multiple light-emitting elements 20 of light-emitting section 20A and disposed on the outer circumference of display area 15 having the size changed to emit light. Controller 117 causes light-emitting elements 20 not disposed on the outer circumference of display area 15 having the size changed not to emit light (step S116A). To be more specific, in step S116A, controller 117 causes light-emitting elements 20 out of light-emitting elements 20 of light-emitting section 20A and disposed on the outer circumference of display area 15 having the size changed to emit light. Controller 117 causes light-emitting elements 20 not disposed on the outer circumference of display area 15 having the size changed not to emit light. Returns to step S103 again, controller 117 determines whether or not controller 117 receives the turn signal from ECU 1001A.

### INDUSTRIAL APPLICABILITY

A rear-view monitor device according to the present disclosure is user-friendly, and is thus expected to be mounted to automobiles.

### REFERENCE MARKS IN DRAWINGS

- 1: automobile
- 1A: car body
- 2: inside
- 2A: outside
- 3: driver seat
- 5: main housing
- 7: display unit
- 9: display
- 11: display area (first display area)
- 12: camera (first camera)
- 14: camera (second camera)
- 15: display area (second display area)
- 16: camera (second camera)
- 17, 117: controller
- 20: light-emitting element
- 20A: light-emitting section
- 20: adjuster
- 1001, 1002: rear-view monitor device.

## Claims

1. A rear-view monitor device comprising:
a main housing mounted to a place in front of a driver seat in an inside of an automobile;
a display unit mounted to the main housing at a side to the driver seat;
a first camera coupled to the display unit, the first camera being capable of capturing a rear view image of an outside of the automobile;
a second camera coupled to the display unit, the second camera being capable of capturing one of a front view image and a side view image of the outside of the automobile; and
a light-emitting section disposed at an outer circumference of the main housing,
wherein the display unit includes:
a display disposed in the main housing; and
a controller coupled to the display, the first camera, and the second camera,
wherein the controller is configured to:
cause a first display area of the display to display therein a first image captured by the first camera;
form a second display area in at least a part of the first display area for displaying, in the second display area, a second image captured by the second camera; and
while forming the second display area, cause a portion of the light-emitting section corresponding to the second display area to emit light.

2. The rear-view monitor device according to claim 1,
wherein the display has an oblong shape, and
wherein the light-emitting section is disposed to a place on the main housing corresponding to an upper section of the display or a lower section of the display.

3. The rear-view monitor device according to claim 2, wherein the light-emitting section includes a plurality of light-emitting elements disposed in a lateral direction at predetermined intervals.

4. The rear-view monitor device according to claim 3, wherein the controller is configured to cause light-emitting elements out of the plurality of light-emitting elements disposed correspondingly to the second display area to emit light while forming the second display area.

5. The rear-view monitor device according to claim 1, wherein the controller is configured to cause the light-emitting section not to emit light while not forming the second display area.

6. The rear-view image monitor device according to claim 1, further comprising an adjuster disposed to the main housing at an outer circumference of the first display area for adjusting at least one of a position and a size of the second display area within the first display area of the display.

7. The rear-view monitor device according to claim 6, wherein, while forming the second display area, the controller is configured to:
cause a portion of the light-emitting section corresponding to the adjusted second display area to emit light; and
cause another portion of the light-emitting section not corresponding to the adjusted second display area not to emit light.

8. An automobile comprising:
a car body;
a driver seat disposed in an inside of the car body; and
a rear-view monitor device which includes
a main housing mounted to a place in front of a driver seat in the inside of the automobile,
a display unit mounted to the main housing at a side to the driver seat,
a first camera coupled to the display unit, the first camera being capable of capturing a rear view image of an outside of the automobile,
a second camera coupled to the display unit, the second camera being capable of capturing one of a front view image and a side view image of the outside of the automobile, and
a light-emitting section disposed on an outer circumference of the main housing,
wherein the display unit includes:
a display disposed in the main housing; and
a controller coupled to the display, the first camera, and the second camera,
wherein the controller is configured to:
cause the display to display a first image captured by the first camera in a first display area of the display;
form a second display area in at least a part of the first display area for displaying, in the second display area, a second image captured by the second camera; and
while forming the second display area, cause a portion of the light-emitting section corresponding to the second display area to emit light.

9. The automobile according to claim 8, further comprising
an engine control unit for transmitting a turn signal,
wherein the second camera is mounted at a place such that the second camera can capture a side view image of the outside, and
wherein the controller is configured to form the second display area upon receiving the turn signal from the engine control unit.

10. The automobile according to claim 9, wherein the controller is configured to:
form the second display area at a left side within the first display area when the turn signal indicates a left turn; and
form the second display area at a right side within the first display area when the turn signal indicates a right turn.
